# EUROPEAN PATENT SPECIFICATION

(11) **EP 2 500 133 B1**
(45) Date of publication and mention of the grant of the patent: **24.12.2014**
(21) Application number: 12001706.6
(22) Date of filing: 13.03.2012
(51) Int. Cl.: B23Q 39/02

(54) **Tool head for machine tools or working centres, and machine comprising said head**
Werkzeugkopf für Werkzeugmaschinen oder Werkbänke und Maschine mit diesem Kopf
Tête d'outil pour machines-outils ou centres de travail et machine comprenant cette tête

(30) Priority: 18.03.2011 IT FI20110040
(43) Date of publication of application: 19.09.2012
(73) Proprietor: Paolino Bacci S.r.l., 56021 Cascina, (PI) (IT)
(72) Inventor: Ruggieri, Alberto, 56025 Pontedera (PI) (IT)
(74) Representative: Mannucci, Michele

(56) References cited:
- EP-A1- 1 452 269
- WO-A1-01/60563
- DE-A1- 10 213 778

## Description

### Technical Field

The present invention relates to a tool head for a numerically controlled machine or working centre. In particular, although not exclusively, the present invention relates to a so-called bi-rotary head, i.e. capable of performing rotating or oscillating movements around two numerically controlled axes, which are usually perpendicular to each other.

The invention also relates to a machine tool or working centre comprising this type of head. Within the present description and the attached claims the terms "machine tool" and "working centre" are used as synonymies.

More in particular, the invention relates to tool heads and related machine tools or working centres specifically designed for working wood.

### State of the Art

In the field of machine tools, in particular of those designed for working wood, numerically controlled machine tools or working centres are well known, comprising a tool head provided with one or more mandrels movable around two numerically controlled axes of oscillation or rotation. The documents EP-A-0744244, EP-A-0873317, and EP-A-1002620 describe examples of this type of machines or working centres. These machines can have an upright along which a slide, carrying the bi-rotary head, vertically shifts, or in some cases a gantry structure, with two uprights and a horizontal crossbar along which the slide, supporting the bi-rotary head, shifts. The bi-rotary head typically carries four crosswise arranged mandrels, or in some cases two opposite mandrels with aligned axes.

Nowadays this type of machine tools requires always increasingly extreme features in terms of flexibility and working speed. Using bi-rotary heads with a high number of mandrels allows to have available numerous tools for working a single piece. However, the presence, for instance, of four mandrels and of four crosswise arranged corresponding tools sets some limits and drawbacks, in particular when the machine has a gantry structure. In particular, impacts can occur between the tools and the structure supporting the pieces under processing. Furthermore, there are more risks of impact between inactive tools and piece under processing.

EP-A-1452269 describes a tool head comprising a plurality of mandrels for corresponding tools, provided with a numerically controlled rotation or oscillation movement, wherein the mandrels are subdivided in at least two mandrel groups, each of which is movable independently of the other around at least one respective first numerically controlled axis of rotation or oscillation independent from each other.

Document DE-A-102 13 778 describes a tool head according to the preamble of appended claim 1.

### Summary of the Invention

The object of the present invention is to provide a tool head of the type described above, which allows workings that cannot be obtained with the prior art heads.

According to one aspect, the invention provides a tool head according to appended claim 1.

In general, the length of the mandrel is intended as the distance of the mandrel joint, i.e. of the mandrel end, from the mandrel head with respect to the numerically controlled axis of rotation around which said mandrel rotates.

With such a designed head it is possible to perform a plurality of workings also on concave surfaces defining particularly narrow volumes, as it will be better explained below with reference to some embodiments of the head according to the invention.

The first group of mandrels preferably comprises a double mandrel. The first group of mandrels advantageously comprises a through-extending shaft, actuated by a single electric motor, at the ends of which two mandrels are applied or can be applied.

According to some embodiments, the first group of mandrels is constituted only by two coaxial mandrels. The two mandrels can be driven into rotation by a common motor or by two independent motors. In the first case, a particularly compact structure is obtained. In other configurations, the first group of mandrels can comprise three T-arranged mandrels. Two of these mandrels can be arranged on a through-extending shaft.

According to advantageous embodiments, the mandrel of the second group of mandrels is provided with a tool-changing actuator, arranged in a diametrically opposite position with respect to the tool-supporting mandrel.

According to preferred embodiment of the invention, the single mandrel of the second group is designed and arranged so that it can be housed, completely or almost completely, inside the volume delimited between two support arms supporting said two mandrel groups, whilst at least one of the mandrels of the first group projects from said volume. In advantageous embodiments, when the mandrel of the second group is in non-use position, housed in the volume between said two support arms, the rear part of the mandrel projects from the volume defined between the two arms not more than the bulk of the mandrel or mandrels of the first group of mandrels.

In advantageous embodiments the head can comprise a bearing structure with a support onto which two substantially parallel arms are cantilevered arranged, defining between themselves an inner volume and between which the mandrels are arranged, the first group of mandrels being carried by one of said arms and the second group of mandrels being carried by the other arm.

In some embodiments at least one of the two groups of mandrels presents a manual or numerically controlled movement in parallel direction to the mandrel axis, with respect to the arm onto which it is mounted. The mandrel of the second group is preferably provided with a movement of this type. In some embodiments, instead of or in addition to this movement also a movement according to a direction orthogonal to the mandrel axis can be provided.

For a greater flexibility of use, in some advantageous embodiments the tool head is provided with a movement around a further numerically controlled axis of rotation or oscillation. Preferably, when the head has the above-mentioned bearing structure with a support and two arms cantilevered arranged onto it, said structure is advantageously supported into rotation around this further numerically controlled axis of rotation or oscillation. This latter is preferably orthogonal to the axes of rotation or oscillation of the two groups of mandrels.

The head can perform a working cycle wherein the first and the second group of mandrels are controlled so as to perform synchronous oscillations or rotations around the two respective axes of rotation, so that while the mandrel of the second group projects from the bearing structure of the head and machines the piece, the mandrels of the first group remain covered by the working mandrel, i.e. they remain parallel to the working mandrel. This avoids impacts between the non-working mandrels and the piece.

According to another aspect, the invention relates to a machine tool or working centre comprising at least one tool head as defined above and at least one work-piece holder. The work-piece holder and the tool head are preferably movable reciprocally according to at least three numerically controlled axes of translation. In the preferred configuration the machine tool therefore has six numerically controlled axes: one axis of rotation of the head, two independent axes of rotation of the two groups of mandrels and three axes of translation.

### Brief description of the drawings

The invention shall be better understood by following the description and the accompanying drawing, which shows non-limiting practical embodiments of the invention. More in particular, in the drawing:
figure 1 shows a front view of a machine tool or working centre according to the invention in a gantry configuration;
figure 2 shows a view according to II-II of figure 1;
figure 3 shows a front view of a tool head in a possible embodiment of the invention;
figure 4 shows a view according to IV-IV of figure 3;
figure 5 shows the head of figure 3 with a different position of the mandrels;
figure 6 shows a method of use of the head of figures 3 to 5;
figure 7 shows a further method of use of the head of figures 3 to 5;
figures 8 and 9 show two arrangements of a tool head according to the invention in a further embodiment;
figures 10 and 11 show two methods of use of a tool head according to the invention;
figure 12 shows a variant of embodiment of the tool head according to the invention in a working phase.

### Detailed description of the preferred embodiments of the invention

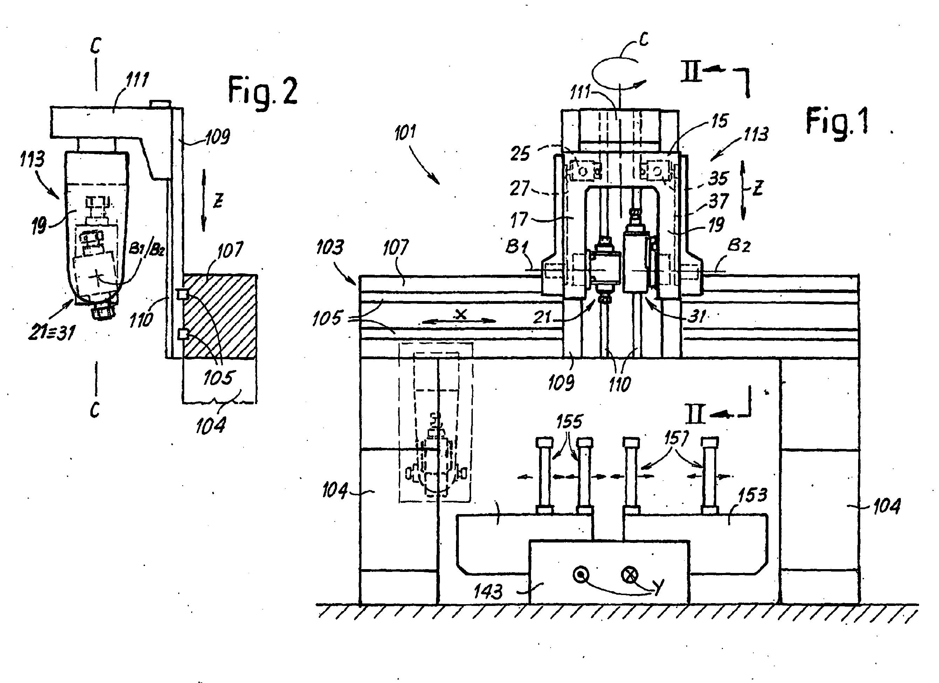

Figures 1 and 2 show a possible configuration of a machine tool or working centre with a bi-rotary tool head according to the invention. In this exemplary embodiment the machine tool, indicated as a whole with number 1, has a gantry structure. It should be understood that the machine tool can be also configured differently, for instance with a structure with a single upright, or with two uprights, fixed or movable along a base, for instance to machine in a swinging cycle pieces carried by two different tables or work-piece holding slides.

The machine, indicated as a whole with number 101, has a gantry structure 103 comprising two vertical uprights 104 supporting a crossbar 107. Along the crossbar 107 guides 105 extend according to a horizontal direction X, which also represents the first numerically controlled axis of horizontal translation of the machine tool. A carriage or slide 109, provided with vertical guides 110, moves along the guides 105.

Along the vertical guides 110 a slide 111 carrying a tool head, indicated as a whole with number 11, moves according to a vertical direction Z (representing a numerically controlled axis of vertical translation). The members described below are mounted onto the tool head 113.

In the illustrated example, below the gantry structure 103 a base 143 extends, along which two carriages or slides, 151 and 153 respectively, slide. Alternatively, only one carriage or slide can be provided. The base 143 extends according to a direction orthogonal to the plane of figure 1, coinciding with the direction of a second numerically controlled axis of horizontal translation, indicated with Y. Respective means 155 and 157 are mounted on the slides or carriages 151 and 153 for supporting and blocking the pieces to be machined, not shown.

The support means 155 and 157 can be adjusted so as to define planes for supporting and blocking pieces to be machined of variable dimensions according to their dimensional and morphologic characteristics. When the pieces are blocked on the carriages 151 and 153 through the means 155 and 157, the tool head 113 and the pieces under processing can move with respect to each other according to the three numerically controlled axes X, Y, and Z of translation as defined above. The use of two slides or carriages 151 and 153 allows the machine tool to work in a swinging cycle, i.e. to place and to machine a piece, or a series of pieces, through the slide 151, which is moved below the tool head 113, whilst the other slide or carriage 153 is moved in a loading and unloading area, distanced from the area of action of the tool head 113. To the numerically controlled movement along the three axes X, Y, Z of horizontal and vertical translation, the numerically controlled movements of oscillation or rotation around numerically controlled rotation axes B1, B2, and C are added, with which the tool head 113 is provided, as described below.

In a possible embodiment (see figures 1 to 5) the tool head 113 is provided with a numerically controlled rotational movement around a vertical axis indicated with C and orthogonal to the axis X. The head has a structure in the shape of an overturned "U" or "C", with a main support 15, from which two arms 17 and 19 parallel to the axis C project in a cantilevered manner. The unit formed by the support 15 and the arms 17, 19 rotates integrally around the axis C of rotation. In this exemplary embodiment, the elements 15, 17, 19 form a rigid structure, the arms 17, 19 remaining at a fixed reciprocal distance.

The arm 17 supports a first mandrel group 23, indicated as a whole with number 21 and comprising, in the illustrated example (as shown in particular in figure 1A) two coaxial mandrels 23. The two mandrels 23 can be advantageously driven into rotation by a single motor. It is therefore a double-mandrel structure with a single through-extending shaft provided with opposite tool holders at the two ends.

Each mandrel 23 can carry an own tool. The tools have been omitted in figures 1 to 6 for the sake of simplicity of representation.

The group 21 of mandrels 23 can rotate around a numerically controlled axis B1 of rotation. The axis B1 of rotation is orthogonal to the axis C of rotation and (when the machine tool has a gantry structure as in the illustrated example) said axis B1 is horizontally directed. The rotation of the group 21 of mandrels 23 around the axis B1 of rotation is controlled by an actuator 25, for example a brushless motor, through a toothed belt 27 or other suitable mechanical transmission member.

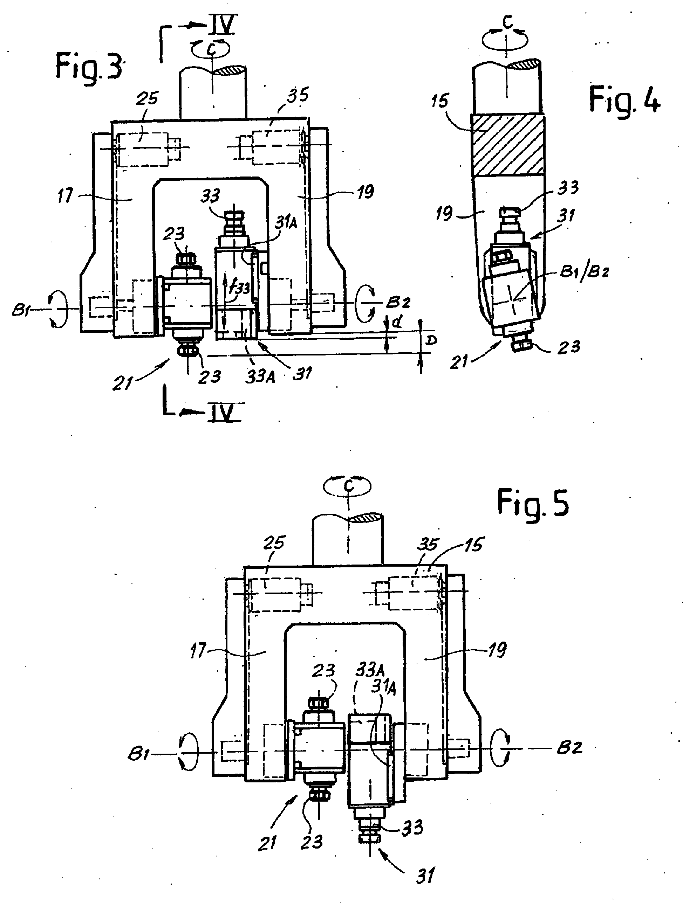

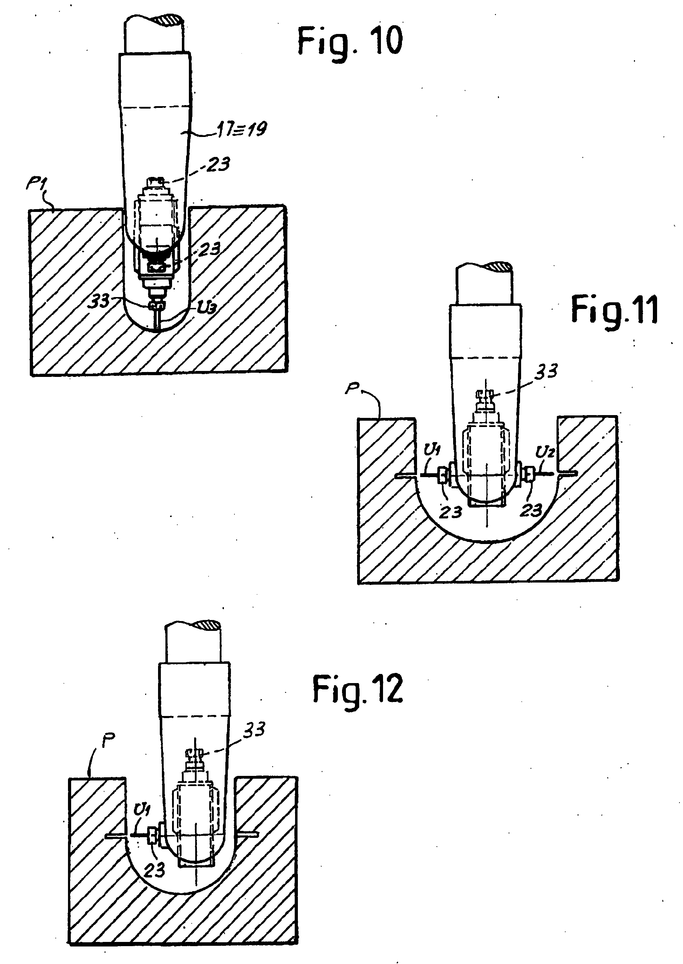

Analogously to what provided for the arm 17, the arm 19 supports a second mandrel group, indicated as a whole with number 31. This second group of mandrels (as shown in particular in figures 3 to 6) comprises a single mandrel 33. In preferred embodiments of the invention the mandrel 33 is provided with a tool-changing system. As known to those skilled in the art, this system provides an actuator 33A arranged on the opposite side with respect to the joint of the tool on the mandrel. The presence of the actuator 33A increases the overall axial dimension of the mandrel. The length of the mandrel 31 (intended as the distance between the tool joining point and the axis B2) is therefore greater than the length of the short mandrels 23 of the group 21 of mandrels. This group 21 of mandrels is not provided with tool-change and has therefore preferably a greater number of mandrels (two instead of one) so that at least two tools can be available, usable sequentially in a working cycle, without the need for changing tool. However, as it will be explained below with reference to figure 12, also configurations with only one mandrel in the group 21 can be provided.

An actuator 35, similar to the actuator 25, controls the rotational movement of the group 31 of mandrels 33 around a second numerically controlled axis of rotation, indicated with B2. In this case again the movement is transmitted by a flexible member, such as a belt 37 or the like. In the illustrated embodiment the two numerically controlled axes B1 and B2 are geometrically coinciding, i.e. the geometrical axis of rotation of the two groups of mandrels is single, and is indicated in the drawings with B-B. This arrangement is optimal for various reasons that will be clearly apparent with reference to the characteristics and features of this bi-rotary head. It is however possible to arrange the numerically controlled rotation axes B1 and B2 parallel to each other, but displaced staggered. In this case the two groups 21, 31 of mandrels rotate around geometrically parallel but staggered axes, and not around a common geometrical axis. It is also possible to provide that the two numerically controlled axes B1 and B2 are not parallel to each other. In this case the two groups 21, 23 of tools rotate around convergent or divergent geometrical axes.

As the two numerically controlled rotation axes B1 and B2 are independent of each other, the two groups 21 and 31 of mandrels rotate or oscillate around the respective axes B1 and B2 independently of each other, controlled by the two independent actuators 25 and 35.

In the illustrated embodiment, the mandrel 33 of the second group 31 has an axial length greater than the double mandrel 23 of the group 21, for the reasons that will be more apparent below.

In some embodiments, whilst the group 21 of mandrels is carried by a plate provided with a simple rotational movement around the axis B1, the mandrel 33 of the group 31 can be provided with a further movement according to a direction parallel to the axis of the same mandrel, as indicated in figure 3 by the double arrow f33. To this end, the mandrel is carried by a slide 31A which can slide according to f33 with respect to a second slide 31B supported rotatable on the arm 19 around the axis B2. A preferably numerically controlled actuator, not shown, controls the movement according to f33. It is possible to provide also the group 21 of mandrels with a movement of this type.

The machine tool 101 described above is substantially provided with six numerically controlled axes: two axes B1, B2 of oscillation or rotation, one for each group 21, 31 of mandrels; one axis C of oscillation or rotation and three axes X, Y, Z of translation.

As it is understood from figures 3 and 4, the mandrel 33 with greater axial extension can be put in such an arrangement (figure 3) so as to be housed substantially inside the space defined by the arms 17, 19, not projecting from said arms. In figure 3d and D indicate the protrusions of the mandrel 33 and of the mandrel 23, the first in non-working position and the second in working position. It is understood that the mandrel 31 of greater dimensions is configured and mounted so as to project by a length "d" equal to or smaller than the protrusion "D" of the mandrel 23 of smaller dimensions when this latter is in working arrangement, completely projecting from the volume defined between the arms 17 and 19. Practically, the protrusion of the mandrel 33 is limited to few millimetres or few centimetres of the protective cover of the tool-changing actuator 33A. In some cases the dimension "d" can be set to zero.

When the mandrel 33 is in non-working position as illustrated in figure 3, it is possible to machine for instance the side of a channel produced in a piece P to be machined, as shown in figure 11, through the tools U1, U2 carried by the mandrels 23 of the group 21 of mandrels. The mandrel 33 is completely inside the bulk of the bearing structure of the tool head 113 and does not interfere with the bottom of the channel of the piece P to be mchined. Vice versa, when it is necessary to machine the bottom of a narrow channel formed in a piece P1, as shown in figure 10, the group 31 is rotated by 90° so as to put the mandrel 33 at a lower height (more projecting) with respect to the height at which the lower mandrel 23 is arranged. The group 21 of mandrels 23 is in the bulk of the motor of the mandrel 33 and the tool U3 can machine the bottom of the narrow channel of the piece P1 without the interference of the mandrels 23 with the channel.

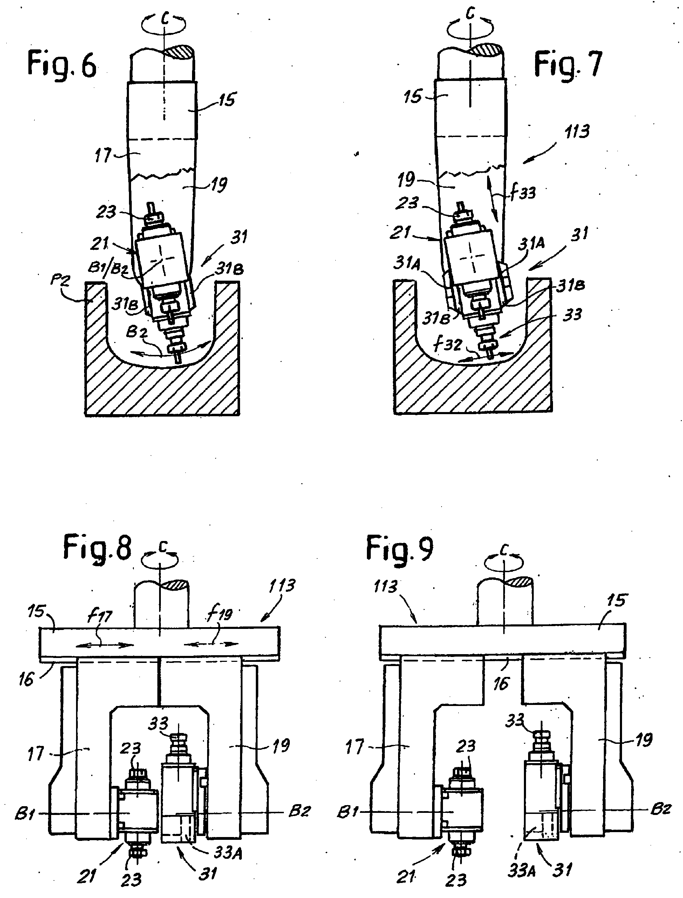

When it is necessary to machine also the sides of the channel through the tool carried by the mandrel 33, it is possible to manage the movement of the groups 21, 31 of tools as schematically indicated in figure 6. The mandrel 33 with greater axial length is put in such an angular position to project from the inner volume defined by the arms 17, 19 and is made rotate around the axis B2 of rotation to perform machining of the inner wall of the channel according to the required angles. To avoid impacts of the tools 23 with the channel walls during machining, it can be advantageously provided to impart to the group 21 of mandrels 23 a rotational movement around the axis B1, synchronous with the movement of the mandrel 33, so that the mandrels 23 remain always in the bulk of the mandrel 33.

With this mechanical arrangement and by programming the synchronous movements around the axes B1, B2 it is possible to machine concave surfaces by means of the long mandrel 33, as if the group 21 of mandrels 23 wouldn't exist. In fact, this group of mandrels is always covered by the long mandrel 33. This advantageous method for controlling the tool head can be achieved when the first group 21 of tools has only one mandrel or two coaxial mandrels, as shown in figure 4.

Figure 7 shows an view similar to that of figure 6, with a modified embodiment of the tool head 113. The same numbers indicate identical or equivalent parts to those described above.

In this exemplary embodiment the mandrel 33 is provided with a further translation movement according to the double arrow f32 in a direction orthogonal to that indicated by the arrow f33. This can be obtained with a suitable system of crosswise guides on the slides 31A, 31B. The movement according to f32 allows the mandrel 33 to exit laterally from the bulk of the arms 17, 19.

Figures 8 and 9 show a different embodiment of the tool head 113, which can be used instead of the previously illustrated embodiments. The same numbers indicate the same or equivalent parts to those in the previous embodiments. The main difference between the embodiment of figures 8 and 9 and the previously described embodiments is that the arms 17 and 19 are not mounted rigidly on the support 15, but they can slide along guides 16 orthogonal to the axis C of rotation and to the main direction of the arms 17, 19. The movement along the guides 16 can be manual or motorized, obtained for instance through a threaded bar and nut screw mechanism and an actuator, not shown. Independently of the way in which the centre distance between the arms 17 and 19 is adjusted or changed, this configuration allows to vary the distance between the groups 21 and 31 of mandrels, to take one or the other reciprocal position shown in figures 8 and 9 or any other intermediate position.

Practically, the possibility of adjusting this distance by means of an actuator during the working cycle allows to move the arms 17 and 19 with respect to each other according to the working cycle needs, for instance also to bring one or the other of the two groups 21 and 31 of mandrels and the related tools in a non-impact position with the work piece.

The movement of the arms 17 and 19 along the support 15 can be also controlled by two independent actuators. In this case the arms 17 and 19 can move according to the double arrows f17 and f19 independently of each other so as to take also non symmetrical positions with respect to the axis C of rotation or oscillation. Alternatively it is possible to provide that one of the two arms, 17 or 19, is fixed with respect to the support 15 and that the distance between the arms is modified by translating only one arm with respect to the other.

Figure 12 shows a view similar to that of figure 11, with a modified embodiment. In this case the first group of mandrels comprises only one mandrel 23. The transverse bulk of the head is lower and it is therefore possible to machine narrower cavities with respect to the cavities that can be machined with the head of figure 11, even if the number of available tools is decreased and therefore the number of different machining operations that can be performed, or the speed for performing equal machining operations in succession.

It is understood that the drawing merely shows a possible embodiment of the invention, which may vary in forms and layouts without however departing from the scope of the concept of the invention, as defined by the appended claims.

## Claims

1. A tool head comprising a plurality of mandrels (23, 33) for corresponding tools (U), provided with a numerically controlled rotational movement (B), wherein said mandrels are subdivided in at least one first mandrel group (21) and one second mandrel group (31), movable independently from one another around a first and a second numerically controlled axes of rotation (B1, B2) independent from each other; further comprising two support arms (17, 19) supporting said two groups of mandrels (23, 33), wherein said first mandrel group (21) comprises at least one mandrel (23); **characterized in that**:
- said second mandrel group (31) comprises only one single mandrel (33);
- said only one single mandrel forming said second mandrel group (31) has a length greater than the length of said at least one mandrel (23) of the first mandrel group;
- said mandrel (33) of the second mandrel group (31) is designed and arranged so that it can be housed inside a volume delimited between said two support arms (17, 19), whilst at least one of the mandrels (23) of the first mandrel group projects from said volume;
- said mandrel (33) of the second mandrel group (31) is designed and arranged so that, when it faces the inside of the volume delimited between said two support arms (17, 19), it projects from said two support arms (17, 19) to an extent not greater than that of said at least one mandrel (23) of the first mandrel group (21) when said mandrel (23) of said first mandrel group is directed toward the outside of said volume.

2. A tool head as claimed in claim 1, **characterized in that** said first mandrel group (21) comprises at least two coaxial mandrels (23).

3. A tool head as claimed in claim 2, **characterized in that** said two mandrels (23) are carried by a single through-extending shaft.

4. A tool head as claimed in claim 2 or 3, **characterized in that** said first mandrel group is constituted only by two coaxial mandrels.

5. A tool head as claimed in claim any one of the preceding claims, **characterized in that** said mandrel (33) of the second mandrel group (31) is designed and arranged so that, when said mandrel faces the inside of the volume delimited between said two support arms (17, 19), it projects from said two support arms up to one third of the extension of projection of said at least one mandrel (23) of the first mandrel group (21) when said at least one mandrel (23) is directed towards the outside of said volume.

6. A tool head as claimed in one or more of the preceding claims, **characterized in that** said mandrel (33) of the second mandrel group (31) is provided with a tool-changing actuator (33A).

7. A tool head as claimed in one or more of the preceding claims, **characterized by** comprising a bearing structure with a support (15), onto which said two support arms (17, 19) are cantilevered arranged, between which said mandrels are arranged, the first mandrel group (21) being carried by one of said two support arms (17) and the second mandrel group (31) being carried by the other support arm (19).

8. A tool head as claimed in any one of the preceding claims, **characterized in that** said bearing structure rotates around a third numerically controlled axis (C) of rotation.

9. A tool head as claimed in any one of the preceding claims, **characterized in that** the distance between said support arms (17, 19) is adjustable in a direction parallel to at least one of said first and second numerically controlled axis (B1, B2) of rotation.

10. A tool head as claimed in claim 8, **characterized in that** at least one of said support arms (17, 19) is movable along guides (16) integral with said support (15).

11. A tool head as claimed in claim 11 or 12, **characterized in that** said third common numerically controlled axis (C) of rotation is oriented at 90° with respect to said first and second numerically controlled axis (B1, B2).

12. A tool head as claimed in one or more of the preceding claims, **characterized in that** said first and said second numerically controlled axis (B1, B2) are substantially parallel to each other.

13. A tool head as claimed in claim 11, **characterized in that** said first and said second numerically controlled axis (B1, B2) are geometrically coinciding.

14. A tool head as claimed in one or more of the preceding claims, **characterized in that** said first mandrel group and said second mandrel group are controlled so as to synchronously rotate around the respective two axes of rotation (B1, B2), so that while the mandrel (33) of the second mandrel group (31) performs a machining, the mandrels (23) of the first mandrel group remain covered by the working mandrel.

15. A tool head as claimed in one or more of claims 1 to 12, **characterized in that** said first mandrel group and said second mandrel group are controlled so as to synchronously rotate around the respective two axes of rotation (B1, B2), so that while the mandrel (33) of the second mandrel group (31) performs a machining involving rotation around the respective axis of rotation (B2), said at least one mandrel (23) of the first mandrel group is imparted a rotational movement around the respective axis of rotation (B1), said rotation being synchronous with the movement of the mandrel (33) of the second mandrel group (31), such that said at least one mandrel (23) of the first mandrel group (21) remain covered by the working mandrel

16. A machine tool comprising at least one tool head and at least one work holder, **characterized in that** said tool head is according to one or more of the preceding claims.

17. A machine tool as claimed in claim 15, **characterized in that** said work holder and said head are reciprocally movable according to at least three numerically controlled axes (X, Y, Z) of translation.

## Patentansprüche

1. Werkzeugkopf mit einer Anzahl an Trägerwellen (23, 33) für entsprechende Werkzeuge (U), die mit einer numerisch gesteuerten Rotationsbewegung (B) versehen sind, wobei die Trägerwellen in zumindest eine erste Trägerwellengruppe (21) und eine zweite Trägerwellengruppe (31) unterteilt sind, die unabhängig voneinander um eine erste und eine zweite numerisch gesteuerte Rotationsachse (B1, B2), welche unabhängig voneinander sind, bewegbar sind; der weiterhin zwei Trägerarme (17, 19) umfasst, welche die beiden Trägerwellengruppen (23, 33) tragen, wobei die erste Trägerwellengruppe (21) zumindest eine Trägerwelle (23) umfasst; **dadurch gekennzeichnet, dass**:
- die zweite Trägerwellengruppe (31) nur eine einzige Trägerwelle (33) umfasst;
- die nur eine einzige Trägerwelle, die die zweite Trägerwellengruppe (31) bildet, eine Länge aufweist, die größer als die Länge der zumindest einen Trägerwelle (23) der ersten Trägerwellengruppe ist;
- die Trägerwelle (33) der zweiten Trägerwellengruppe (31) derart gestaltet und angeordnet ist, dass sie innerhalb eines Volumens, das zwischen den beiden Trägerarmen (17, 19) begrenzt ist, untergebracht werden kann, während zumindest eine der Trägerwellen (23) der ersten Trägerwellengruppe von dem Volumen vorsteht;
- die Trägerwelle (33) der zweiten Trägerwellengruppe (31) derart gestaltet und angeordnet ist, dass, wenn sie dem Inneren des Volumens, das zwischen den beiden Trägerarmen (17, 19) begrenzt ist, gegenübersteht, sie von den beiden Trägerarmen (17, 19) in einem Ausmaß vorsteht, das nicht größer als das der zumindest einen Trägerwelle (23) der ersten Trägerwellengruppe (21) ist, wenn die Trägerwelle (23) der ersten Trägerwellengruppe zu der Außenseite des Volumens hin gerichtet ist.

2. Werkzeugkopf wie in Anspruch 1 beansprucht, **dadurch gekennzeichnet, dass** die erste Trägerwellengruppe (21) zumindest zwei koaxiale Trägerwellen (23) umfasst.

3. Werkzeugkopf wie in Anspruch 2 beansprucht, **dadurch gekennzeichnet, dass** zwei Trägerwellen (23) von einer einzigen durchgehenden Welle getragen werden.

4. Werkzeugkopf wie in Anspruch 2 oder 3 beansprucht, **dadurch gekennzeichnet, dass** die erste Trägerwellengruppe nur aus zwei koaxialen Trägerwellen gebildet ist.

5. Werkzeugkopf wie in einem der vorhergehenden Ansprüche beansprucht, **dadurch gekennzeichnet, dass** die Trägerwelle (33) der zweiten Trägerwellengruppe (31) derart gestaltet und angeordnet ist, dass, wenn die Trägerwelle dem Inneren des Volumens, das zwischen den beiden Trägerarmen (17, 19) begrenzt ist, gegenübersteht, sie von den beiden Trägerarmen bis zu einem Drittel der Projektionserstreckung der zumindest einen Trägerwelle (23) der ersten Trägerwellengruppe (21), wenn die zumindest eine Trägerwelle (23) zu der Außenseite des Volumens hin gerichtet ist, vorsteht.

6. Werkzeugkopf wie in einem oder mehreren der vorhergehenden Ansprüche beansprucht, **dadurch gekennzeichnet, dass** die Trägerwelle (33) der zweiten Trägerwellengruppe (31) mit einem Werkzeugwechselaktuator (33A) versehen ist.

7. Werkzeugkopf wie in einem oder mehreren der vorhergehenden Ansprüche beansprucht, **gekennzeichnet durch** Umfassen einer Trägerstruktur mit einem Träger (15), auf dem die beiden Trägerarme (17, 19), zwischen denen die Trägerwellen angeordnet sind, freitragend angeordnet sind, wobei die erste Trägerwellengruppe (21) von einem der beiden Trägerarme (17) und die zweite Trägerwellengruppe (31) von dem anderen Trägerarm (19) getragen wird.

8. Werkzeugkopf wie in einem der vorhergehenden Ansprüche beansprucht, **dadurch gekennzeichnet, dass** die Trägerstruktur um eine dritte numerisch gesteuerte Rotationsachse (C) rotiert.

9. Werkzeugkopf wie in einem der vorhergehenden Ansprüche beansprucht, **dadurch gekennzeichnet, dass** der Abstand zwischen den Trägerarmen (17, 19) in einer Richtung, die zu zumindest einer der ersten und zweiten numerisch gesteuerten Rotationsachsen (B1, B2) parallel ist, einstellbar ist.

10. Werkzeugkopf wie in Anspruch 8 beansprucht, **dadurch gekennzeichnet, dass** zumindest einer der Trägerarme (17, 19) entlang von Führungen (16), die einstückig mit dem Träger (15) sind, bewegbar ist.

11. Werkzeugkopf wie in Anspruch 11 oder 12 beansprucht, **dadurch gekennzeichnet, dass** die dritte gemeinsame numerisch gesteuerte Rotationsachse (C) um 90° in Bezug auf die ersten und zweiten numerisch gesteuerten Achsen (B1, B2) orientiert ist.

12. Werkzeugkopf wie in einem oder mehreren der vorhergehenden Ansprüche beansprucht, **dadurch gekennzeichnet, dass** die erste und die zweite numerisch gesteuerte Achse (B1, B2) im Wesentlichen parallel zueinander sind.

13. Werkzeugkopf wie in Anspruch 11 beansprucht, **dadurch gekennzeichnet, dass** die erste und die zweite numerische gesteuerte Achse (B1, B2) geometrisch übereinstimmen.

14. Werkzeugkopf wie in einem oder mehreren der vorhergehenden Ansprüche beansprucht, **dadurch gekennzeichnet, dass** die erste Trägerwellengruppe und die zweite Trägerwellengruppe derart gesteuert sind, dass sie synchron um die zwei jeweiligen Rotationsachsen (B1, B2) rotieren, so dass, während die Trägerwelle (33) der zweiten Trägerwellengruppe (31) eine Bearbeitung ausführt, die Trägerwellen (23) der ersten Trägerwellengruppe von der arbeitenden Trägerwelle bedeckt bleiben.

15. Werkzeugkopf wie in einem oder mehreren der Ansprüche 1 bis 12 beansprucht, **dadurch gekennzeichnet, dass** die erste Trägerwellengruppe und die zweite Trägerwellengruppe derart gesteuert sind, dass sie synchron um die zwei jeweiligen Rotationsachsen (B1, B2) rotieren, so dass, während die Trägerwelle (33) der zweiten Trägerwellengruppe (31) eine Bearbeitung, die eine Rotation um die jeweilige Rotationsachse (B2) beinhaltet, ausführt, der zumindest einen Trägerwelle (23) der ersten Trägerwellengruppe eine Rotationsbewegung um die jeweilige Rotationsachse (B1) vermittelt wird, wobei die Rotation synchron mit der Bewegung der Trägerwelle (33) der zweiten Trägerwellengruppe (31) ist, so dass die zumindest eine Trägerwelle (23) der ersten Trägerwellengruppe (21) von der arbeitenden Trägerwelle bedeckt bleibt.

16. Maschinenwerkzeug, das zumindest einen Werkzeugkopf und zumindest eine Werkstückaufnahme umfasst, **dadurch gekennzeichnet, dass** der Werkzeugkopf gemäß einem oder mehreren der vorhergehenden Ansprüche gebildet ist.

17. Maschinenwerkzeug wie in Anspruch 15 beansprucht, **dadurch gekennzeichnet, dass** die Werkstückaufnahme und der Kopf wechselseitig entlang zumindest dreier numerisch gesteuerter Translationsachsen (X, Y, Z) bewegbar sind.

## Revendications

1. Une tête d'outil comprenant une pluralité de mandrins (23, 33) pour des outils correspondants (U), pouvant être animée d'un mouvement de rotation (B) commandé numériquement, lesdits mandrins étant subdivisés en au moins un premier groupe de mandrins (21) et un second groupe de mandrins (31), déplaçables indépendamment l'un de l'autre autour d'un premier et d'un deuxième axes de rotation (B1, B2) commandés numériquement et indépendants l'un de l'autre ; comprenant en outre deux bras de support (17, 19) supportant lesdits deux groupes de mandrins (23, 33), ledit premier groupe de mandrins (21) comprenant au moins un mandrin (23) ; **caractérisé en ce que** :
- ledit second groupe de mandrins (31) comprend seulement un mandrin unique (33) ;
- ledit mandrin unique formant ledit second groupe de mandrins (31) a une longueur supérieure à celle dudit ou desdits mandrin(s) (23) du premier groupe de mandrins ;
- ledit mandrin (33) du second groupe de mandrins (31) est conçu et agencé de telle sorte qu'il puisse être logé à l'intérieur d'un volume délimité par lesdits deux bras de support (17,19), tandis qu'au moins l'un des mandrins (23) du premier groupe de mandrins fait saillie depuis ledit volume ;
- ledit mandrin (33) du second groupe de mandrins (31) est conçu et agencé de telle manière que, lorsqu'il fait face à l'intérieur du volume délimité par lesdits deux bras de support (17, 19), il fasse saillie depuis lesdits deux bras de support (17, 19) en ne dépassant pas ledit ou lesdits mandrin(s) (23) du premier groupe de mandrins (21) lorsque ledit mandrin (23) dudit premier groupe de mandrins est dirigé vers l'extérieur dudit volume.

2. Une tête d'outil selon la revendication 1, **caractérisée en ce que** ledit premier groupe de mandrins (21) comprend au moins deux mandrins coaxiaux (23).

3. Une tête d'outil selon la revendication 2, **caractérisée en ce que** lesdits deux mandrins (23) sont portés par un seul arbre traversant.

4. Une tête d'outil selon la revendication 2 ou 3, **caractérisée en ce que** ledit premier groupe de mandrins est constitué de seulement deux mandrins coaxiaux.

5. Une tête d'outil selon l'une quelconque des revendications précédentes, **caractérisée en ce que** ledit mandrin (33) du second groupe de mandrins (31) est conçu et agencé de telle manière que lorsque le ledit mandrin fait face à l'intérieur du volume délimité par lesdits deux bras de support (17, 19), il fasse saillie depuis lesdits deux bras de support jusqu'à un tiers de l'extension de la saillie dudit ou desdits mandrin(s) (23) du premier groupe de mandrins (21) lorsque ledit ou lesdits mandrin(s) (23) est(sont) dirigé(s) vers l'extérieur dudit volume.

6. Une tête d'outil selon une ou plusieurs des revendications précédentes, **caractérisée en ce que** ledit mandrin (33) du second groupe de mandrins (31) est pourvu d'un organe d'actionnement de changement d'outil (33A).

7. Une tête d'outil selon une ou plusieurs des revendications précédentes, **caractérisé en ce qu'**elle comprend une structure d'appui avec un support (15), sur lequel lesdits deux bras de support (17,19) sont agencés en porte-à-faux et entre lesquels lesdits mandrins sont agencés, le premier groupe de mandrins (21) étant porté par l'un desdits deux bras de support (17) et le second groupe de mandrins (31) étant porté par l'autre bras de support (19).

8. Une tête d'outil selon l'une quelconque des revendications précédentes, **caractérisée en ce que** ladite structure d'appui tourne autour d'un troisième axe de rotation (C) commandé numériquement.

9. Une tête d'outil selon l'une quelconque des revendications précédentes, **caractérisée en ce que** la distance entre lesdits bras de support (17, 19) est réglable dans une direction parallèle à au moins l'un desdits premier et deuxième axes de rotation (B1, B2) commandés numériquement.

10. Une tête d'outil selon la revendication 8, **caractérisée en ce qu'**au moins l'un desdits bras de support (17, 19) est déplaçable le long de guides (16) formés d'un seul tenant avec ledit support (15).

11. Une tête d'outil selon la revendication 11 ou 12, **caractérisée en ce que** ledit troisième axe commun de rotation (C) commandé numériquement est orienté à 90 degrés par rapport auxdits premier et deuxième axes (B1, B2) commandés numériquement.

12. Une tête d'outil selon une ou plusieurs des revendications précédentes, **caractérisé en ce que** lesdits premier et seconds axes (B1, B2) commandés numériquement sont sensiblement parallèles l'un à l'autre.

13. Une tête d'outil selon la revendication 11, **caractérisée en ce que** lesdits premier et deuxièmes axes (B1, B2) contrôlés numériquement coïncident géométriquement.

14. Une tête d'outil selon une ou plusieurs des revendications précédentes, **caractérisée en ce que** ledit premier groupe de mandrins et ledit second groupe de mandrins sont commandés de manière à tourner de manière synchronisée autour de leur axe respectif de rotation (B1, B2), de sorte que lorsque le mandrin (33) du second groupe de mandrins (31) réalise un usinage, les mandrins (23) du premier groupe de mandrins restent couverts par le mandrin de travail.

15. Une tête d'outil selon une ou plusieurs des revendications 1 à 12, caractérisée en que ledit premier groupe de mandrins et ledit second groupe de mandrins sont commandés de manière à tourner de manière synchronisée autour de leur axe respectif de rotation (B1, B2), de sorte que lorsque le mandrin (33) du second groupe de mandrins (31) réalise un usinage impliquant une rotation autour de son axe respectif de rotation (B2), ledit ou lesdits mandrin(s) (23) du premier groupe de mandrins subi(ssen)t un mouvement de rotation autour de son axe respectif de rotation (B1), ladite rotation étant synchronisée avec le mouvement du mandrin (33) du second groupe de mandrins (31), de façon à ce que ledit ou lesdits mandrin(s) (23) du premier groupe de mandrins reste couvert par le mandrin de travail.

16. Une machine-outil comprenant au moins une tête d'outil et au moins un organe de maintien de pièce à usiner, **caractérisée en ce que** ladite tête d'outil est conforme à une ou plusieurs des revendications précédentes.

17. Une machine-outil selon la revendication 16, **caractérisée en ce que** ledit organe de maintien de pince à pièce à usiner et ladite tête sont déplaçables réciproquement selon au moins trois axes (X, Y, Z) de translation commandés numériquement.
